# EUROPEAN PATENT SPECIFICATION

(11) **EP 4 103 929 B1**
(45) Date of publication and mention of the grant of the patent: **05.04.2023**
(21) Application number: 21713878.3
(22) Date of filing: 26.01.2021
(51) Int. Cl.: G01N 21/41, G01N 21/43

(54) **METHOD OF ANALYSIS OF REFRACTIVE INDEX USING A POLARISATION-SENSITIVE OPTICAL SENSOR AND SENSOR SYSTEM COMPRISING THE OPTICAL SENSOR**
VERFAHREN ZUR BESTIMMUNG DES BRECHUNGSINDEX MITTELS EINES POLARISATIONSEMPFINDLICHEN OPTISCHEN SENSORS UND SENSORSYSTEM MIT DEM OPTISCHEN SENSOR
PROCÉDÉ D'ANALYSE DE L'INDICE DE RÉFRACTION À L'AIDE D'UN CAPTEUR OPTIQUE SENSIBLE À LA POLARISATION ET SYSTÈME DE DÉTECTION COMPRENANT LE CAPTEUR OPTIQUE

(43) Date of publication of application: 21.12.2022
(73) Proprietor: Vysoká Skola Bánská - Technická Univerzita Ostrava, 70800 Ostrava-Poruba (CZ)
(72) Inventor: HLUBINA, Petr, 70030 Ostrava-Zábreh (CZ); CIPRIAN, Dalibor, 72100 Ostrava-Svinov (CZ)
(74) Representative: Kendereski, Dusan
(86) International application number: PCT/CZ2021/050010
(87) International publication number: WO 2022/135625

(56) References cited:
- CN-B- 109 115 728
- RU-C1- 2 661 454
- GRYGA MICHAL ET AL: "Bloch Surface Wave Resonance Based Sensors as an Alternative to Surface Plasmon Resonance Sensors", SENSORS, vol. 20, no. 18, 8 September 2020 (2020-09-08), page 5119, XP055841413, DOI: 10.3390/s20185119 cited in the application
- GRYGA M. ET AL: "One-dimensional photonic crystal for Bloch surface waves and radiation modes-based sensing", OPTICAL MATERIALS EXPRESS, vol. 9, no. 10, 10 September 2019 (2019-09-10), page 4009, XP055841416, DOI: 10.1364/OME.9.004009 cited in the application
- GRYGA MICHAL ET AL: "Sensing of gaseous analytes via Bloch surface waves", OPTICAL SENSING AND DETECTION VI, 1 April 2020 (2020-04-01), page 51, XP055841893, DOI: 10.1117/12.2555713 ISBN: 978-1-5106-3481-7
- GRYGA M ET AL: "Surface electromagnetic wave sensor utilizing a one-dimensional photonic crystal", SPIE PROCEEDINGS; [PROCEEDINGS OF SPIE ISSN 0277-786X], SPIE, US, vol. 11028, 11 April 2019 (2019-04-11), pages 110281P-110281P, XP060123381, DOI: 10.1117/12.2520724 ISBN: 978-1-5106-3673-6
- YUAN W ET AL: "IMPROVING THE SENSITIVITY LIMIT OF SURFACE PLASMON RESONANCE BIOSENSORS BY DETECTING MIXED INTERFERENCE SIGNALS", APPLIED OPTICS, OPTICAL SOCIETY OF AMERICA, WASHINGTON, DC, US, vol. 46, no. 33, 20 November 2007 (2007-11-20), pages 8068-8073, XP001509653, ISSN: 0003-6935, DOI: 10.1364/AO.46.008068
- RAMIREZ-DUVERGER ET AL: "Surface wave effect on light scattering from one-dimensional photonic crystals", OPTICS COMMUNICATIONS, ELSEVIER, AMSTERDAM, NL, vol. 277, no. 2, 4 August 2007 (2007-08-04), pages 302-309, XP022183586, ISSN: 0030-4018, DOI: 10.1016/J.OPTCOM.2007.05.028
- WATAD IBRAHIM ET AL: "Spectropolarimetric Surface Plasmon Resonance Sensor and the Selection of the Best Polarimetric Function", IEEE JOURNAL OF SELECTED TOPICS IN QUANTUM ELECTRONICS, IEEE SERVICE CENTER, PISCATAWAY, NJ, US, vol. 23, no. 2, March 2017 (2017-03), pages 1-9, XP011624326, ISSN: 1077-260X, DOI: 10.1109/JSTQE.2016.2575543 [retrieved on 2016-09-30]

## Description

### Field of the Invention

The invention relates to a method of analysing refractive index by means of a polarisation-sensitive optical sensor and to a sensor system comprising the optical sensor.

### Background of the Invention

Extremely sensitive optical sensors are designed to take advantage of surface plasmon resonance (SPR) phenomenon based on surface plasmon waves (SPWs), see H. Raether: "Surface Plasmons on Smooth and Rough Surfaces and on Gratings," Springer-Verlag, New York, 1988, or J. Homola: "Surface Plasmon Resonance Based Sensors," Springer-Verlag, New York, 2006, or of the Bloch surface waves (BSWs) phenomenon, see P. Yeh et al.: "Optical surface waves in periodic layered media, "Appl. Phys. Lett., 32 (1978), 104-105, or J. A. Polo et al.: "Electromagnetic Surface Waves: A Modern Perspective," Elsevier Inc., London, 2013.

The SPR phenomenon occurs on the surface of a thin metal layer, such as gold, silver and aluminium, where the p-polarised optical wave is able under certain conditions to excite a surface plasmon wave which is associated with electron oscillations on the metal surface. In this case, the thin metal layer is able to react to the medium (chemical, biochemical or biological), which is characterized by a certain effective refractive index. The SPR sensor, see J. Homola: "Surface Plasmon Resonance Based Sensors," Springer, 2006., OR I. Abdulhalim et al.: "Surface plasmon resonance sensors - A mini review," Electromagnetics, 28 (2008), 213-242, then uses the binding of a detected substance to the metal surface and the corresponding change in refractive index, which is inscribed in the detected parameter, which may be the intensity or phase of the reflected optical wave. The SPR phenomenon is detected by a resonance dip in intensity upon detection, see J. Homola et al.: "Surface plasmon resonance sensors: Review," Sens. Actuators B, 54 (1999), 3-15, or by a change in resonance phase, see S. Deng et al.: "Phase-sensitive surface plasmon resonance sensors: Recent progress and future prospects," Sensors, 17 (2017), 2819. In addition, SPR resonance can be distinguished in the angular or spectral region (J Homola, 2006, I. Abdulhalim et al., 2008). During SPR resonance in the angular region, a monochromatic source is used and the change in refractive index of a detected substance is accompanied by a change in resonance angle. During SPR resonance in the spectral region, a polychromatic source is used and the change in refractive index of a detected substance is as accompanied by a change in resonance wavelength. Detection can also take place in the vicinity of resonance, by measuring at a certain wavelength either a change in intensity or a phase with the change in effective refractive index of the medium.

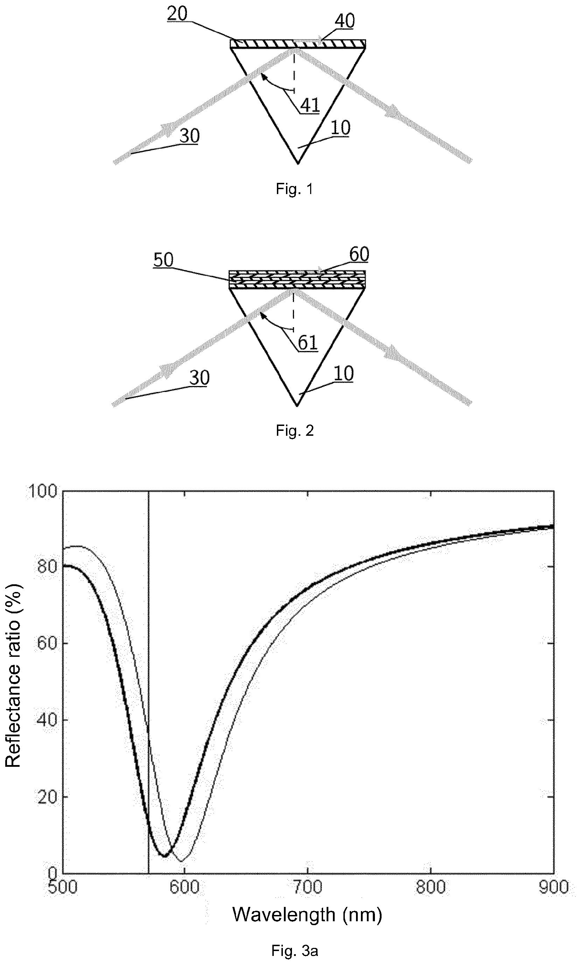

Fig. 1 is a schematic diagram of a commonly used SPR optical sensor with a Kretschmann prism configuration that excites a surface plasmon wave (SPW) **40** by means of a thin metal layer **20** and an optical prism **10** on one side of the layer **20.** An incident collimated white light beam **30** excites the surface plasmon wave **40** when the angle of incidence θ_{SPW} **41** is such that it satisfies the resonance condition for SPW excitation, i. e. it is greater than or equal to the value of the critical angle of incidence θ_{crit} (known as "total internal reflection angle"). The change in the resonance angle or resonance wavelength of the surface plasmon wave **40** then serves to analyse the refractive index of the medium located on the opposite side of the thin metal layer **20** based on known methods.

BSWs can be generated on the surface of a system of periodic dielectric layers, see Yeh et al., 1978, or R. D. Meade et al.: "Electromagnetic Bloch waves at the surface of a photonic crystal," Phys. Roar. B, 44 (1991), 10961-10964, or W. M. Robertson, M.S. May: "Surface electromagnetic wave excitation on one-dimensional photonic band-gap arrays," Appl. Phys. Lett., 74 (1999), 1800-1802, where this multilayer system is characterized by a forbidden band gap. BSW arises in the process of amplifying an optical wave having either *p* (TM) or *s* (TE) polarisation, and this wave propagates through a multilayer and results, similarly to the SPR phenomenon, in sensitivity to the medium. Similar to the SPR phenomenon, the detected parameter can be the intensity or phase of an optical wave, see Sinibaldi et al.: "Direct comparison of the performance of Bloch surface wave and surface plasmon polariton sensors," Sens. Actuators B Chem., 174 (2012), 292-298, or the international patent application WO 2012129196 A2 (WM Robertson, "Surface electromagnetic waves in photonic band gap multilayers," 2012) and U.S. patent application US 2008218860 A1 (WM Robertson, "Optical sensor based on surface electromagnetic wave resonance in photonic band gap materials," 2008). Excitation of BSW is manifested by a resonance dip in intensity, or by a resonant change in phase, see Y. Li et al.: "Phase properties of Bloch surface waves and their sensing applications," Appl. Phys. Lett., 103 (2013), 041116. Similar to the SPR phenomenon, the excitation of BSWs can be resolved in the angular or spectral domain. Because the multilayer is characterized by significantly less absorption than the metal layer, the resonance with BSWs is significantly narrower than in the case of SPR. This means that shifts of resonance wavelength are more easily detectable, see the international patent application WO 2011058502 A1 (F. Geobaldo et al., "Gas sensing device having a photonic structure operating by means of Bloch surface waves and corresponding manufacturing process," 2011) or the international patent application WO 2012129196 A2.

Fig. 2 is a schematic diagram of a commonly used BSW optical sensor with a Kretschmann prism configuration that excites a Bloch surface wave (BSW) **60** by means of a dielectric multilayer **50** and an optical prism **10** on one side of the multilayer **50.** An incident collimated white light beam **30** excites the Bloch surface wave **60** when the angle of incidence θ_{BSW} **61** is such that it satisfies the resonance condition for BSW excitation, i. e. it is greater than or equal to the value of the critical internal angle of incidence (θ_{crit}). The change in the resonance intensity or resonance phase of the Bloch surface wave **60** then serves to analyse the refractive index of the medium located on the opposite side of the dielectric multilayer **50** based on known methods.

An example of such a BSW optical sensor is described in M. Gryga et al.: "Bloch Surface Wave Resonance Based Sensors as an Alternative to Surface Plasmon Resonance Sensors," Sensors, 20 (2020), 5119. This optical sensor can be used to measure relative air humidity close to 100 %, where the sensor uses the shift of resonance wavelength in the minimum of the Rp/Rs reflectance ratio curve, whereby a change in refractive index of either ambient humid air or water condensate thickness is detected with a change in humidity, wherein the sensitivity of such a sensor based on the shift of resonance wavelength is insufficient for detection. A similar example is an optical sensor for measuring the vapour content of ethanol in air based on the shift of resonance wavelength in the minimum of the Rp/Rs reflectance ratio curve, see P. Hlubina et al.: "Ultrahigh-sensitive plasmonic sensing of gas using a two-dimensional dielectric grating," Opt. Lett., 44 (2020), 5602-5605. Another example is an optical SPR sensor for measuring the mass concentration of ethanol in water, see P. Hlubina et al.: "Spectral interferometry-based surface plasmon resonance sensor," Optics Communications 354 (2015) 240-245, or of NaCl in water, see P. Hlubina et al.: "Spectral Phase Shift of Surface Plasmon Resonance in the Kretschmann Configuration: Theory and Experiment," Plasmonics (2017) 12: 1071-1078, where a shift of resonance wavelength occurs for these analytes and in the mode above the critical angle, there are no detectable changes in intensities of the polarisation components. For all of these sensors, it is necessary to use a spectrophotometer with a wide range of available wavelengths, which increases the cost of the experimental set-up and complicates the feasibility of field analysis.

The analysis of response of the dielectric multilayer in the mode above the critical angle was performed in two publications, see M. Gryga et al.: "One-dimensional photonic crystal for Bloch surface waves and radiation modes based sensing," Opt. Mat. Express, 9 (2019), 4009-4022, and M. Gryga et al.: "Bloch Surface Wave Resonance Based Sensors as an Alternative to Surface Plasmon Resonance Sensors," Sensors, 20 (2020), 5119.

A sensor application in a subcritical mode can be found only in the first publication (Gryga et al., 2019), which discloses a method using resonance of a mode excited in the multilayer and a reverse shift of resonance wavelength with a change in refractive index of the analysed medium. This publication describes that when the angle of incidence decreases below the critical angle, the guided mode is transformed into the radiation mode, which leads to resonance dips with shifts to shorter wavelengths in the spectral reflectance curves of the s-polarised wave. The maximum resonance dip to values close to zero is caused by the coupling of light from the dielectric multilayer into the analysed medium (water, 50% ethanol in water) and occurs precisely because of the subcritical mode, i. e. when the angle of incidence is less than the critical angle. In case of analysing aqueous ethanol, the concentration dependence of the increasing depth and width of the resonance dip on the increasing concentration of ethanol in water can be measured.

The latter publication (Gryga et al., 2020) demonstrates the absence of resonances in BSWs and a resonance dip for the theoretical value of spectral reflectance Rₚ(λ) as well as the value of reflectance R_{PA45}(λ) for the subcritical mode of the angle of incidence.

Similar methods of analysing refractive index by means of a polarisation-sensitive optical sensor and to sensor systems comprising the optical sensor are disclosed in publications of M. Gryga et al.: "Sensing of gaseous analytes via Bloch surface waves," Optical Sensing and Detection VI, (2020) page 51; M. Gryga et al.: "Surface electromagnetic wave sensor utilizing a one-dimensional photonic crystal," Spie Proceedings, vol. 11028 (2019) pages 110281P-1- 110281P-8; W. Yuan et al.: "Improving the sensitivity limit of surface plasmon resonance biosensors by detecting mixed interference signals," Applied Optics, vol. 46 no. 33 (2007) pages 8068-8073; Ramirez-Duverger et al.: "Surface wave effect on light scattering from one-dimensional photonic crystals," Optics Communications, vol. 277 no. 2 (2007) pages 302-309; I. Watad et al.: "Spectropolarimetric surface plasmon resonance sensor and the selection of the best polarimetric function," IEEE Journal of Selected Topics in Quantum Electronics, vol. 23 no. 2 (2017) pages 1-9; and in patents CN 109115728 B and RU 2661454 C1.

Commercially available systems use only SPR phenomenon techniques, see the systems produced by Horiba, Biocompare, BioNavis, XanTec bioanalytics, Biacore, etc. These systems are intended for laboratory analysis, not for field analysis.

The disadvantage of known analytical methods operating in the mode above and below the critical angle of incidence is the fact that their dynamic range and sensitivity to changes in refractive index at the interface of two media are not sufficient to detect the corresponding shift of resonance wavelength in a particular medium with a difference in refractive index between components A and B in the selected measured concentration range. In addition, it is necessary to use a spectrophotometer in the currently known analytical methods, which significantly complicates the experimental set-up of the sensor system, e. g. for use in field analysis.

### Summary of the Invention

The present invention is defined in claims 1 and 8.

It is an object of the present invention to provide a method for analysing refractive index of an analysed medium with an improved dynamic range and sensitivity to changes in refractive index at the interface of two media using a polarisation-sensitive optical sensor.

It is a further object of the present invention to provide a sensor system comprising the optical sensor in an improved experimental set-up for use e. g. in field analysis.

The above-cited object is achieved by the method of analysis according to the independent claim 1.

The essence of the present method of analysis is to illuminate a side of a dielectric multilayer adjacent to an optical prism by a collimated and linearly polarised beam comprising both s- and p-components of a polarised wave generated by a quasi-monochromatic source such that the angle of incidence θ is less than the critical angle θ_{crit} to excite a Bloch surface wave. Subsequently, at least a portion of the *s*- and *p-*component of the polarised wave is irradiated from a sensor side of the dielectric multilayer is emitted into the analysed medium, and at the same time at least a portion of the *s*- and *p*-component of the polarised wave is reflected from the side of the dielectric multilayer adjacent to the optical prism, which is manifested in a reflectance ratio Rp/Rs characteristic of the analysed medium having a refractive index n₁, where Rp and Rs are reflectances for the *p*- and *s*-components of the polarised wave. The wavelength of the quasi-monochromatic source is selected such that the reflectance ratio Rp/Rs at said wavelength changes to a greater extent as compared to a resonance wavelength for excitation of the Bloch surface wave. After processing and evaluating the signal corresponding to the reflectance Rp and Rs, the reflectance ratio Rp/Rs is assigned to the value of refractive index n₁ of the analysed medium, which is a mixture comprising 0 to 100 % of component A and 100 to 0 % of component B, wherein the mixture exhibits a change in (i. e. depends on) refractive index depending on the ratio of components A and B. The signal intensity corresponding to the reflectance ratio Rp/Rs is thus a function of the concentration of components A and B in the mixture. It turns out that the dynamic range and sensitivity to changes in refractive index in the present method of analysis are significantly greater than in the case of sensors using the phenomenon of SPR or the generation of BSWs.

The optional steps of the present method of analysis are specified in the dependent claims 2 to 7.

The above-cited object is further achieved by a sensor system according to the independent claim 8 for implementing the above-cited method of analysis.

The essence of the present sensor system is the presence of a quasi-monochromatic light source characterized by a working wavelength range comprising a medium wavelength and a medium spectrum width, and a collimator oriented with respect to the side of the dielectric multilayer adjacent to the optical prism in such a way that the angle of incidence is smaller than the critical angle θ_{crit} for excitation of a Bloch surface wave. While the orientation of the collimator ensures the feasibility of the above method of analysis in this sensor system, the presence of a quasi-monochromatic source greatly simplifies and reduces the cost of the experimental set-up, which can be used in this arrangement for field analysis.

The preferred embodiments of the above-cited sensor system are specified in the dependent claims 9 to 15.

In other words, a method of analysis is disclosed using a polarisation-sensitive optical sensor comprising a dielectric multilayer that is sensitive to the surrounding medium for at least one polarisation (e. g. TM), but preferably for both polarisations (i. e. TM and TE), of incident light waves provided that the angle of incidence θ is smaller than the critical angle θ_{crit} and optical resonance associated with generation of BSWs is not used, where the angle of incidence θ_{BSW} is greater than the critical angle θ_{crit}. The binding of a detected substance to the surface of the dielectric multilayer and the corresponding changes in the refractive index are reflected in the change in the detected intensity of the light reflected from the dielectric multilayer.

The advantage is that the sensitivity of such a method of analysis can vary with the number of dielectric layers contained in the multilayer of the optical sensor. An example is a multilayer comprising four TiO₂/SiO₂ bilayers and a termination TiO₂ layer, the parameters of which have been presented in two publications, see M. Gryga et al.: "One-dimensional photonic crystal for Bloch surface waves and radiation modes based sensing," Opt. Mat. Express, 9 (2019), 4009-4022, or M. Gryga et al.: "Bloch Surface Wave Resonance Based Sensors as an Alternative to Surface Plasmon Resonance Sensors," Sensors, 20 (2020), 5119. Namely in four TiO₂/SiO₂ bilayers (i = j = 1, .., 4) are of geometric thicknesses t₀i = 166.7, 182.8, 179.0, and 183.9 nm, or tij = 79.9, 89.2, 86.6 and 87.2 nm respectively, and the termination TiO₂ layer has a thickness t₀5 = 177.4 nm with an effective rough layer with a thickness t₀6 = 13.5 nm. The sensor is able to work with both larger (i = j > 4) and smaller number of bilayers (i = j < 4), resulting in a change in sensitivity, but there is a limitation in the available technology. In addition, there is no need to use a spectrophotometer and working wavelengths can be variably selected to use available light sources (e. g. quasi-monochromatic LED sources or a polychromatic source (white light) with a suitable narrowband filter).

In view of the principle of the applicable analytical method, the sensor system according to the invention comprising the polarisation-sensitive optical sensor does not require the use of a spectrophotometer, and thus the sensor system is significantly simpler compared to SPR and BSW sensor arrangements.

The advantage is that with such a polarisation-sensitive optical sensor it is possible to use either a relatively cheap LED source of non-polarised light or a robust polychromatic source (e. g. white light) with a narrowband filter that has the desired maximum transmittance at the wavelength with maximum sensor sensitivity.

A sensor system comprising a polarisation-sensitive optical sensor further preferably comprises a polariser with the direction of transmission oriented 45° with respect to the plane of incidence, a glass optical prism with a refractive index of 1.50 to 1.75, or more specifically 1.50 to 1.71 (suitable glasses being e. g. of BK7 or SF10 type), a Wollaston prism as a polarisation splitter and two photodetectors with amplifiers (integrated in the photodetectors or connected in series behind the photodetectors), a two-channel A/D converter and a control unit. The Wollaston prism has the advantage of compactness, while the amplifiers provide sufficient voltage of the analysable signal for the A/D converter. The sensitivity of a polarisation-sensitive optical sensor under the condition of subcritical excitation is determined by the amplification of the optical wave due to multiple reflections in the dielectric multilayer.

For easy replacement of the dielectric multilayer in the event of wearing off, corrosion or damage, it can be applied to a glass substrate with a refractive index corresponding to the refractive index of the optical prism glass used and between the optical prism and the side of the substrate adjacent to the optical prism (i. e. the side opposite to the side on which the dielectric multilayer is applied), a layer of immersion liquid having a refractive index differing from the refractive index of the optical prism by at most 0.01 can be included to maintain optical coupling.

The preferred medium to be analysed is a mixture of water and air (i. e. humid air), a mixture of ethanol and air (i. e. ethanol vapours), a mixture of ethanol and water (e. g. alcoholic beverages, ethanol-based biofuels), a mixture of glycerol and water and a mixture of dissolved inorganic and/or organic salts and water, especially NaCl and water. In the case of analysing a liquid analyte, it is advantageous to use a flow chamber; for gaseous analytes, in addition to the flow chamber, open space is also sufficient.

### Description of the Drawings

The essence of the invention is further elucidated on the basis of examples of its embodiment, which are described with the aid of the accompanying drawings, where:
Fig. 1 is a schematic diagram of a commonly used SPR optical sensor with a prism configuration for the excitation of a surface plasmon wave (SPW);
Fig. 2 is a schematic diagram of a commonly used BSW optical sensor with a prism configuration for the excitation of a Bloch surface wave (BSW);
Fig. 3a represents the dependence of the reflectance ratio Rp/Rs as a function of wavelength for two analysed media during SPR excitation;
Fig. 3b represents the dependence of the reflectance ratio Rp/Rs as a function of wavelength for two analysed media during BSW excitation;
Fig. 4 is a schematic diagram of an optical sensor with a prism configuration that allows a portion of the incident light to be emitted through a dielectric multilayer.
Fig. 5 represents the dependence of the reflectance ratio Rp/Rs as a function of wavelength for two analysed media in the mode below the critical angle.
Fig. 6 is a schematic diagram of a sensor system according to the present invention with a prism-coupled polarisation-sensitive optical sensor using a dielectric multilayer.

### Embodiments of the Invention

These embodiments illustrate exemplary embodiments of the invention, which, however, have no limiting effect on the scope of protection.

In the following description, reference is made to the figures which illustrate the essence of the operation of the optical sensor which is the subject of the invention.

### Example 1: Description of a sensor system comprising an optical sensor according to the invention

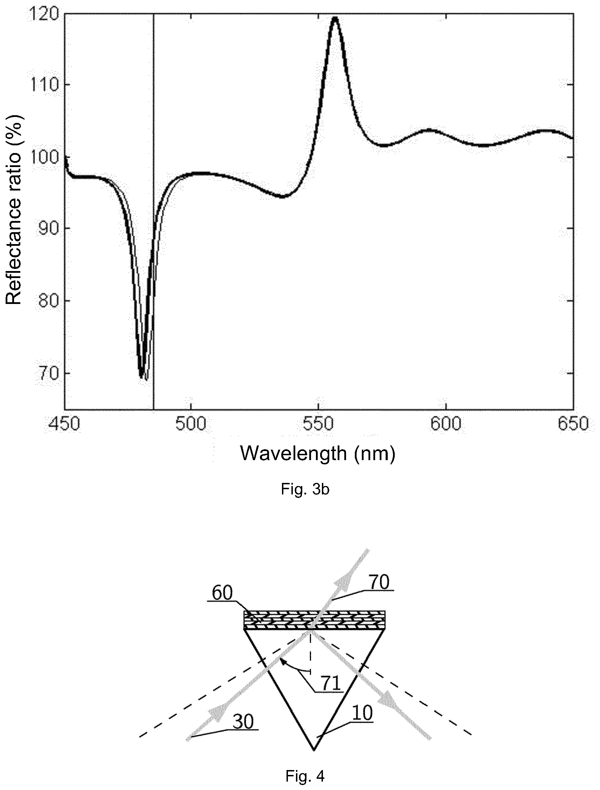

Fig. 4 is a schematic diagram of an exemplary optical sensor with a prism configuration that allows a portion of an incident beam **30** (e. g. white light or light from an LED) to be transmitted through a dielectric multilayer **50** deposited on an optical prism **10** on one side thereof. The incident collimated beam **30** impinges on the dielectric multilayer **50** and is radiated as a radiated beam **70** because the angle of incidence θ **71** is smaller than the critical angle of incidence θ_{crit}. A portion of the incident beam **30** is reflected from the dielectric multilayer **50** and the remainder passes through the dielectric multilayer **50** as the radiated beam **70.** The condition for generating an evanescent wave required to excite a Bloch surface wave (BSW) are disturbed, as shown in Fig. 2. In this case, the change in refractive index of the analysed medium **130** is inscribed in the change in the detected intensity.

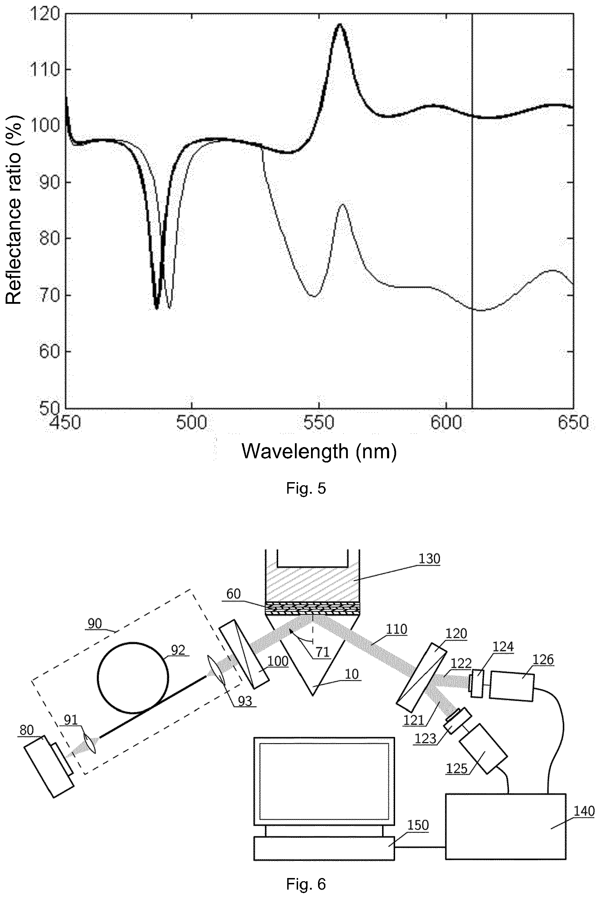

Fig. 6 further presents a schematic diagram of an optical sensor which is incorporated into a sensor system according to the present invention. The sensor system includes a quasi-monochromatic source **80,** such as an LED or white light with a narrowband filter, from which the collimated beam **30** is formed by a collimator **90** comprising a lens **91,** an optical fibre **92** and a collimating lens **93,** wherein the collimated beam **30** passes through a polariser **100** with the direction of transmittance oriented 45° with respect to the plane of incidence, i. e. the plane in which the incident and reflected beam propagates, so that it contains both s- (TE) and *p*- (TM) polarised waves of incident radiation. The collimated beam **30** impinges on the sensor formed by the prism **10** arranged on the dielectric multilayer **50** and the angle of incidence θ **71**, which is set by the orientation of the collimator **90,** is less than the critical angle θ_{crit}, so that Bloch surface waves (BSWs) in the dielectric multilayer **50** are not excited and the dielectric multilayer **50** reflects both polarised components. In a reflected collimated beam **110,** after passing through a Wollaston prism **120,** two separate polarisation components **121** and **122** are arranged, which carry information on the refractive index of the analysed medium **130** in the form of reflectances Rp and Rs. The signals corresponding to the polarisation components **121** and **122** are separately detected by a first and second detector **123** and **124.** The electric current (photocurrent) generated by the first and second detectors **123** and **124** is converted to voltage by an electrical circuit including a first and second amplifier **125** and **126,** and this voltage is fed to the A/D converter **140,** which is connected, for example, by a USB cable to the control unit **150.** The advantage of this sensor system design resides in that the control unit **150** can convert changes in the refractive index of the analysed medium **130** to signal changes for one or the other polarisation, or to the signal ratio for both polarisations.

Light from an LED **80** at a wavelength of e. g. 625 nm is coupled to the optical fibre **92** terminated by a collimator **90.** A collimated beam passing through the polariser **100** oriented 45° with respect to the plane of incidence impinges on the optical prism **10** of sides of equal length, i. e. a prism with apex angle of 60 degrees. The optical coupling between the coupling prism **10** and the dielectric multilayer **50** is ensured by using an immersion liquid with a refractive index which is close to the refractive index of the coupling prism **10.** For a prism comprising SF10 glass (n = 1.7283), or BK7 glass (n = 5168), for example, a liquid with a refractive index of 1.730, or 1,516 is used. The dielectric multilayer **50** itself consists, for example, of four TiO₂/SiO₂ bilayers and a termination TiO₂ layer, which is in contact with the analysed medium **130** with a certain refractive index. The collimated beam, which is reflected from the dielectric multilayer **50** at an angle of incidence **71** θ = 41.2°, which is less than the critical angle θ_{crit}, so that a Bloch surface wave is not excited, passes through the Wollaston prism **120** and is separated to TM and TE waves, so-called polarisation components **121** and **122.** Each of the two waves impinges either on the first photodetector **123** provided with the first amplifier **125** or on the second photodetector **124** provided with the second amplifier **126.** The resulting signals of polarisation components **121** and **122** corresponding to both polarisations are subsequently applied to the input of the two-channel A/D converter **140** and analysed by the control unit **150.**

### Example 2: Comparison of dynamic range and sensitivity to change in refractive index at the interface of two media using known sensors

Fig. 3a shows the dependence of the reflectance ratio Rp/Rs on the wavelength for two analysed media during the excitation of a surface plasmon wave (SPW) in the configuration according to Fig. 1, where Rp or Rs are reflectances for a wave polarised in the plane of incidence (*p*-polarised wave), or for a wave polarised perpendicularly to the plane of incidence (*s*-polarised wave). The dependence of the reflectance ratio Rp/Rs on the wavelength in the sensor according to Fig. 1 was calculated for the Cr/Au/Au_ef system on SF10 glass substrate (Cr being the adhesive layer for Au on the substrate, and Au_ef representing the effective rough Au layer), thicknesses being 2/44/2 nm and the calculation was performed for the angle of incidence 41 θ_{SPR} = 30° and the refractive indices of the external medium for the values of 1 and 1.005, respectively. The material characterization of the layers is according to the publication by R. Chlebus et al.: "Surface Plasmon Resonance Based Measurement of the Dielectric Function of Thin Metal Film," Sensors, 18 (2018), 3693.

Fig. 3b shows the dependence of the reflectance ratio Rp/Rs on the wavelength for two analysed media during the excitation of a Bloch surface wave (BSW) in the configuration according to Fig. 2. The dependence of the reflectance ratio Rp/Rs on the wavelength in the sensor according to Fig. 2 was calculated for four TiO₂/SiO₂ bilayers and a termination TiO₂ layer, which is in contact with the analysed medium **130,** and the calculation was performed for the angle of incidence **81** θ_{BSW} = 41.9° and the refractive indices of the external medium for the values of 1 and 1.005, respectively. The material characterization of the layers is according to the publication by M. Gryga et al.: "One-dimensional photonic crystal for Bloch surface waves and radiation modes based sensing," Opt. Mat. Express, 9 (2019), 4009-4022.

At the resonance wavelength, in the first case (Figs. 1, 3a) the surface plasmon wave (SPW) is excited, or in the second case (Figs. 2, 3b) the Bloch surface wave (BSW) is excited, which is manifested in both cases by a dip (decrease) in the reflectance ratio Rp/Rs.

A comparison of Fig. 3a and Fig. 3b shows that the dip is significantly narrower in the case of the Bloch surface wave (BSW) than in the case of the surface plasmon wave (SPW) and that in both cases the dip shifts as the refractive index of the analysed medium **130** changes. With regard to the detection principle, which does not use a spectrophotometer, it is necessary to use a quasi-monochromatic source with a very specific wavelength (e. g. a laser or an LED or a polychromatic source with a filter with a very narrow transmittance spectrum) and the change in refractive index of the analysed medium is inscribed in the change in detected intensity, as indicated by the intersections of the dashed vertical lines in both Fig. 3a and Fig. 3b. The disadvantage is the possible unavailability of a quasi-monochromatic source with the currently required wavelength due to the very narrow detection window of wavelengths.

### Example 3: Comparison of dynamic range and sensitivity to change in refractive index at the interface of two media with a sensor according to the invention

Fig. 5 shows the dependence of the reflectance ratio Rp/Rs on the wavelength for two analysed media in the mode of a subcritical angle of incidence of white light **30** on the dielectric multilayer **50** in the configuration according to Fig. 4. The dependence of the reflectance ratio Rp/Rs on the wavelength was calculated for the same dielectric multilayer **50** of Example 1, including the material characteristics, i. e. for four TiO₂/SiO₂ bilayers and a termination TiO₂ layer in contact with the analysed medium **130,** and the calculation was performed for an angle of incidence **71** θ = 41.2° and the refractive indices of the external medium for the values of 1 and 1.005, respectively. The material characterization of the layers is according to the publication by M. Gryga et al.: "One-dimensional photonic crystal for Bloch surface waves and radiation modes based sensing," Opt. Mat. Express, 9 (2019), 4009-4022.

It can be seen from Fig. 5 that the change in refractive index of the analysed medium **130** at the wavelength of 610 nm is inscribed in the change in the detected intensity, as indicated by the intersections with the vertical line. Fig. 5 shows a wide range of wavelengths in which there are significant changes in intensity, so that compared to the resonance method, there will not be any problem with the choice of wavelength of the LED source **80** (e. g. with the above-mentioned wavelength of 610 nm), or with a polychromatic source with a narrowband filter (e. g. with a maximum transmittance at the above-mentioned wavelength of 610 nm or it may be another wavelength in the range of about 580 nm to 650 nm according to Fig. 5), with regard to the availability of these sources and the usability of these sources e. g. for field measurements.

It can be seen from Fig. 3a that for a sensor using SPR, the change in reflectance ratio is 23 % at 570 nm, which corresponds to a sensitivity of 4600 % per refractive index unit (RIU). Similarly, it can be seen from Fig. 3b that for a sensor using BSW, at a wavelength of 485 nm, the change in reflectance ratio is 8.6 % and the corresponding sensitivity is 1720 % per RIU. On the contrary, it can be seen from Fig. 5 that for a sensor using the subcritical mode, at a wavelength of 610 nm, the change in the reflectance ratio is 34 % and the corresponding sensitivity is 6800 % per RIU. Thus, the sensitivity increased compared to known methods by about half (to a sensor using SPR), or approximately three times (to a sensor using BSW) respectively.

Changes in refractive index of the surrounding medium allow, for example, measurements in the range of:
- 0 to 100 % by weight of ethanol dissolved in distilled water, with a change in refractive index from 1.333 to 1.3618,
- 0 to 50 % by weight of glycerol dissolved in distilled water, with a change in refractive index from 1.333 to 1.3958,
- 0 to 100 % relative humidity, with a change in refractive index from 1.00027 to 1.00038.
- 0 to 100 % of the relative vapour content of ethanol in the air (analogous to the relative humidity of the air), with a change in the refractive index from 1.00027 to 1.0035,
- 0 to 10 % by weight of NaCl dissolved in distilled water, with a change in refractive index from 1.333 to 1.3515.

Within the dynamic ranges for the individual analytical media listed above; it may be necessary to re-adjust the angle of incidence of the collimated beam **30** during analysis due to sensor saturation.

In the above-mentioned dielectric multilayer with four TiO₂/SiO₂ bilayers, the functionality of the method for measuring the relative humidity of air, or ethanol vapours, was confirmed for the range of wavelengths 610 to 640 nm, when the experimental set-up worked with a coupling prism BK7 and an angle of incidence θ = 41.1°. Similarly, the functionality of the method in monitoring expiration was confirmed. The change of the angle of incidence to the value θ = 63.7° then confirmed the functionality of the method for measuring the mass concentrations of both ethanol and glycerol dissolved in water, or NaCl dissolved in water, for the wavelength range 620 to 640 nm.

Corresponding changes in refractive index, or the percentage of detected liquid (e. g. ethanol or glycerol) in distilled water, or relative humidity, lead to changes in the detected intensity for the TM and TE wave, or ratio of TM and TE wave intensities. With regard to the calibration, it is then possible to assign to each measured value of the detected quantity a corresponding value of the refractive index of the liquid, or percentage of detected liquid in distilled water, or relative humidity.

The sensor can be used to detect gases (water vapour, ethanol vapour) and liquids (ethanol, glycerol, or NaCl dissolved with different concentrations in water), respectively. When treating the surface of the layer in contact with the analyte, detection of specific biological substances can be performed, e. g. by immobilizing a ligand on the sensor side of the multilayer for analyte detection.

Sensors that are capable of detecting both gases and liquids by the method of the present invention are not available from existing products. The sensor, whose principle is original and is resistant to changes in the output power of the radiation source, allows the detection of both gases and liquids. The sensor is thus predestined, for example, for environmental diagnostics with regard to the detection of air and water pollutants, or in medicine in the detection of specific biological substances.

### Industrial Applicability

The sensor can be used in various fields of technology, including sensorics of gases and liquids, such as environmental diagnostics with regard to the detection of pollutants in air and water, as well as medical diagnostics, e. g. with regard to both patient exhalation monitoring and specific biological agents in their blood, etc.

### List of Reference Signs

- 10: optical prism
- 20: thin metal layer
- 30: incident beam
- 40: surface plasmon wave (SPW)
- 41: angle of incidence θ_{SPW}
- 50: dielectric multilayer
- 60: Bloch surface wave (BSW)
- 61: angle of incidence θ_{BSW}
- 70: radiated beam
- 71: angle of incidence θ
- 80: quasi-monochromatic source
- 90: collimator
- 91: lens
- 92: optical fibre
- 93: collimation lens
- 100: polariser
- 110: reflected beam
- 120: Wollaston prism
- 121: first polarisation component
- 122: second polarisation component
- 123: first detector
- 124: second detector
- 125: first amplifier
- 126: second amplifier
- 130: analysed medium
- 140: A/D converter
- 150: control unit

## Claims

1. A method of analysing a refractive index of an analysed medium (130) by means of a polarisation-sensitive optical sensor comprising an optical prism (10) provided with a dielectric multilayer (50) having a side adjacent to the optical prism (10) and a sensor side adapted to come into contact with the analysed medium (130), wherein the analysed medium (130) is a mixture comprising 0 to 100 % of component A and 100 to 0 % of component B, wherein the mixture exhibits a change in refractive index depending on the ratio of components A and B, wherein the method comprises the steps of:
a. contacting the analysed medium (130) having a refractive index n₁ with the sensor side of the dielectric multilayer (50);
b. illuminating the optical prism (10) and the side of the dielectric multilayer (50) adjacent to the optical prism (10) by a collimated and linearly polarised beam (30) comprising both s- and p-components of a polarised wave generated by a quasi-monochromatic source (80) such that the angle of incidence θ (71) is less than the critical angle θ_{crit} for excitation of a Bloch surface wave, wherein afterwards at least a portion of the *s*- and *p*-component of the polarised wave is reflected from the side of the dielectric multilayer (50) adjacent to the optical prism (10), which is manifested in a reflectance ratio Rp/Rs for the analysed medium (130) having a refractive index n₁, where Rp and Rs are reflectances for the *p*- and *s*-components of the polarised wave, wherein the wavelength of the quasi-monochromatic source (80) is selected such that the reflectance ratio Rp/Rs at said wavelength changes to a greater extent as compared to a resonance wavelength for excitation of the Bloch surface wave;
c. separating the *s*- and *p*-components of the polarised wave of a reflected beam (110) into polarisation components (121) and (122) by means of a polarisation splitter;
d. detecting each polarisation component (121, 122) by a photodetector (123, 124) to produce an analysable signal corresponding to the reflectance Rp and Rs; and
e. evaluating the signal corresponding to the reflectance Rp and Rs by means of a control unit (150), wherein the reflectance ratio Rp/Rs is a function of the value of refractive index n₁ of the analysed medium (130), wherein n₁ depends on the ratio of components A and B in the mixture.

2. The method of claim 1, wherein prior to step a., an operating range of wavelengths λ is set such that it is selected to determine a maximum change in the reflectance ratio Rp/Rs for the analysed medium (130) having a refractive index nₘₐₓ and nₘᵢₙ, wherein the percentage content of component A in the analysed medium (130) with a refractive index nₘₐₓ is greater than in the analysed medium (130) with a refractive index nₘᵢₙ, wherein the analysed medium (130) is a mixture comprising 0 to 100 % of component A and 100 to 0 % of component B, wherein the mixture exhibits a change in refractive index depending on the ratio of components A and B.

3. The method of claim 2, wherein after setting the operating range of wavelengths λ and prior to step a. according to claim 1, a calibration is performed comprising steps a. to e. according to claim 1 for the analysed media (130) having a refractive index nₘₐₓ and nₘᵢₙ, wherein the values of nₘₐₓ and nₘᵢₙ determine the dynamic range of the method of analysis, and wherein after assigning the reflectance ratio Rp/Rs to the values of refractive indices nₘₐₓ and nₘᵢₙ, a calibration dependence of the reflectance ratio Rp/Rs on the refractive index of the analysed medium (130) is determined, wherein the refractive index is a function of concentration of the components A and B,
wherein the analysed medium (130) is a mixture comprising 0 to 100 % of component A and 100 to 0 % of component B, wherein the mixture exhibits a change in refractive index depending on the ratio of components A and B.

4. The method according to any of the preceding claims, wherein the illumination of the optical prism (10) and the side of the dielectric multilayer (50) adjacent to the optical prism (10) by the quasi-monochromatic source (80) is performed by an LED or by a polychromatic source with a narrowband filter.

5. The method according to any of the preceding claims, wherein the polarisation splitter is a Wollaston prism (120).

6. The method according to any of the preceding claims, wherein the analysable signal corresponding to the reflectance Rp and Rs is amplified by an amplifier (125, 126) and converted into a digital signal by an A/D converter (140).

7. The method according to any of the preceding claims, wherein the analysed medium (130) is any mixture selected from the group comprising a mixture of water and air, a mixture of ethanol and air, a mixture of ethanol and water, a mixture of glycerin and water, and a mixture of dissolved inorganic and/or organic salts and water, in particular NaCl and water.

8. A sensor system for implementing the method according to any of the preceding claims, comprising a light source, a collimator (90), a polariser (100), a polarisation-sensitive optical sensor, a polarisation splitter and two photodetectors (123, 124), and further a control unit (150), wherein the light source is optically connected to the collimator (90) and configured to generate a beam (30) comprising both s- and p-components of a polarised wave, wherein the polarisation-sensitive optical sensor comprises an optical prism (10) provided with a dielectric multilayer (50) with a side adjacent to the optical prism (10) and a sensor side adapted to come into contact with an analysed medium (130) being a mixture comprising 0 to 100 % of component A and 100 to 0 % of component B and exhibiting a change in refractive index depending on the ratio of components A and B, wherein the light source is a quasi-monochromatic source (80), wherein the collimator (90) is oriented with respect to the side of the dielectric multilayer (50) adjacent to the optical prism (10) such that the angle of incidence θ (71) of the beam illuminable by the quasi-monochromatic source (80) is smaller than the critical angle θ_{crit} for excitation of a Bloch surface wave in order to reflect at least a portion of the s- and p-component of the polarised wave from the side of the dielectric multilayer (50) adjacent to the optical prism (10) and to manifest the reflection in a reflectance ratio Rp/Rs for the analysed medium (130) having a refractive index n₁, where Rp and Rs are reflectances for the p- and s-components of the polarised wave, wherein the quasi-monochromatic source (80) is configured to generate the beam (30) having a wavelength selected such that the reflectance ratio Rp/Rs at said wavelength changes to a greater extent as compared to a resonance wavelength for excitation of the Bloch surface wave, wherein the polarisation splitter is configured to separate the *s*- and *p*-components of the polarised wave of a reflected beam (110) into polarisation components (121) and (122), wherein the photodetector (123, 124) is configured to detect each polarisation component (121, 122) and to produce an analysable signal corresponding to the reflectance Rp and Rs, wherein the control unit (150) is configured to evaluate the signal corresponding to the reflectance Rp and Rs, the reflectance ratio Rp/Rs being a function of the value of refractive index n₁ of the analysed medium (130), wherein n₁ depends on the ratio of components A and B in the mixture.

9. The sensor system according to claim 8, wherein the quasi-monochromatic source (80) is an LED or a polychromatic source with a narrowband filter.

10. The sensor system according to any of claims 8 to 9, wherein the direction of transmission of the polariser (100) is oriented 45° with respect to the plane of incidence of the illuminable beam.

11. The sensor system according to any of claims 8 to 10, wherein a flow chamber or an open space is arranged on the sensor side of the dielectric multilayer (50).

12. The sensor system according to any of claims 8 to 11, wherein the dielectric multilayer (50) comprises at least one TiO₂/SiO₂ bilayer and a terminating TiO₂ layer arranged on the sensor side of the multilayer (50).

13. The sensor system according to any of claims 8 to 12, wherein the optical prism (10) is made from glass having a refractive index of 1.50 to 1.71.

14. The sensor system according to claim 13, wherein a layer of immersion liquid having a refractive index differing from the refractive index of the optical prism by at most 0.01 is comprised between the optical prism (10) and the dielectric multilayer (50).

15. The sensor system according to any of claims 8 to 14, wherein the photodetector (123, 124) is connected to an amplifier (125, 126) and an A/D converter (140) which is connected to the control unit (150).

## Patentansprüche

1. Ein Verfahren zur Bestimmung eines Brechungsindex eines analysierten Mediums (130) mittels eines polarisationsempfindlichen optischen Sensors umfassend ein optisches Prisma (10), das eine dielektrische Mehrfachschicht (50) aufweist, die eine dem optischen Prisma (10) benachbarten Seite und eine Sensorseite hat, die angepasst ist, mit dem analysierten Medium (130) in Kontakt zu kommen, wobei das analysierte Medium (130) eine Mischung ist, die 0 bis 100 % der Komponente A und 100 bis 0 % der Komponente B umfasst, wobei die Mischung eine Änderung des Brechungsindex in Abhängigkeit vom Verhältnis der Komponenten A und B zeigt, wobei das Verfahren die folgenden Schritte umfasst:
a. In-Kontakt-Bringen des analysierten Mediums (130) mit einem Brechungsindex n₁ mit der Sensorseite der dielektrischen Mehrfachschicht (50);
b. Beleuchten des optischen Prismas (10) und der dem optischen Prisma (10) benachbarten Seite der dielektrischen Mehrfachschicht (50) durch einen kollimierten und linear polarisierten Strahl (30), der sowohl s- als auch p-Komponenten einer von einer quasi-monochromatischen Quelle (80) erzeugten polarisierten Welle umfasst, so dass der Einfallswinkel θ (71) kleiner als der kritische Winkel θ_{crit} zur Anregung einer Bloch-Oberflächenwelle ist, wobei anschliessend zumindest ein Teil der s- und p-Komponente der polarisierten Welle von der dem optischen Prisma (10) benachbarten Seite der dielektrischen Mehrfachschicht (50) reflektiert wird, was sich in einem Reflexionsverhältnis Rp/Rs für das analysierte Medium (130) mit einem Brechungsindex n₁ äußert, wobei Rp und Rs Reflexionsgrade für die p- und s-Komponenten der polarisierten Welle sind, wobei die Wellenlänge der quasi-monochromatischen Quelle (80) so gewählt ist, dass das Reflexionsverhältnis Rp/Rs bei dieser Wellenlänge stärker im Vergleich zu einer Resonanzwellenlänge zur Anregung der Bloch-Oberflächenwelle verändert wird;
c. Trennen der s- und p-Komponenten der polarisierten Welle eines reflektierten Strahls (110) in Polarisationskomponenten (121) und (122) mittels eines Polarisationsteilers;
d. Detektieren jeder Polarisationskomponente (121, 122) durch einen Photodetektor (123, 124), um ein auswertbares Signal zu erzeugen, das dem Reflexionsgrad Rp und Rs entspricht; und
e. Auswerten des dem Reflexionsgrad Rp und Rs entsprechenden Signals mittels einer Steuereinheit (150), wobei das Reflexionsverhältnis Rp/Rs eine Funktion des Wertes des Brechungsindex n₁ des analysierten Mediums (130) ist, wobei n₁ vom Verhältnis der Komponenten A und B in der Mischung abhängt.

2. Das Verfahren nach Anspruch 1, wobei vor Schritt a. ein Betriebsbereich von Wellenlängen λ derart eingestellt wird, dass er ausgewählt wird, um eine maximale Änderung des Reflexionsverhältnisses Rp/Rs für das analysierte Medium (130) mit einem Brechungsindex nₘₐₓ und nₘᵢₙ zu bestimmen, wobei der prozentuale Gehalt der Komponente A im analysierten Medium (130) mit einem Brechungsindex nₘₐₓ größer als im analysierten Medium (130) mit einem Brechungsindex nₘᵢₙ ist, wobei das analysierte Medium (130) eine Mischung ist, die 0 bis 100 % der Komponente A und 100 bis 0 % der Komponente B umfasst, wobei die Mischung eine Änderung des Brechungsindex in Abhängigkeit vom Verhältnis der Komponenten A und B zeigt.

3. Das Verfahren nach Anspruch 2, wobei nach dem Einstellen des Betriebsbereichs von Wellenlängen λ vor Schritt a. nach Anspruch 1, eine Kalibrierung durchgeführt wird, umfassend die Schritte a. bis e. nach Anspruch 1 für die analysierten Medien (130) mit einem Brechungsindex nₘₐₓ und nₘᵢₙ, wobei die Werte von nₘₐₓ und nₘᵢₙ den Dynamikbereich des Verfahrens zur Bestimmung bestimmen, und wobei nach dem Zuordnen des Reflexionsverhältnisses Rp/Rs zu den Werten der Brechungsindizes nₘₐₓ und nₘᵢₙ eine Kalibrierungsabhängigkeit des Reflexionsverhältnisses Rp/Rs auf dem Brechungsindex des analysierten Mediums (130) bestimmt wird, wobei das analysierte Medium (130) eine Mischung ist, die 0 bis 100 % der Komponente A und 100 bis 0 % der Komponente B umfasst, wobei die Mischung eine Änderung des Brechungsindex in Abhängigkeit vom Verhältnis der Komponenten A und B zeigt.

4. Das Verfahren nach einem der vorhergehenden Ansprüche, wobei das Beleuchten des optischen Prismas (10) und die dem optischen Prisma (10) benachbarte Seite der dielektrischen Mehrfachschicht (50) durch die quasi-monochromatische Quelle (80) durch eine LED oder durch eine polychromatische Quelle mit einem schmalbandigen Filter durchgeführt wird.

5. Das Verfahren nach einem der vorhergehenden Ansprüche, wobei der Polarisationsteiler ein Wollaston-Prisma (120) ist.

6. Das Verfahren nach einem der vorhergehenden Ansprüche, wobei das auswertbare Signal, das dem Reflexionsgrad Rp und Rs entspricht, durch einen Verstärker (125, 126) verstärkt wird und durch einen A/D-Wandler (140) in ein digitales Signal umgewandelt wird.

7. Das Verfahren nach einem der vorhergehenden Ansprüche, wobei das analysierte Medium (130) eine beliebige Mischung ist, die aus der Gruppe ausgewählt ist, die eine Mischung aus Wasser und Luft, eine Mischung aus Ethanol und Luft, eine Mischung aus Ethanol und Wasser, eine Mischung aus Glycerin und Wasser und eine Mischung von gelösten anorganischen und/oder organischen Salzen und Wasser, insbesondere NaCl und Wasser, umfasst.

8. Ein Sensorsystem zur Durchführung des Verfahrens nach einem der vorhergehenden Ansprüche, umfassend eine Lichtquelle, einen Kollimator (90), einen Polarisator (100), einen polarisationsempfindlichen optischen Sensor, einen Polarisationsteiler und zwei Photodetektoren (123, 124), und ferner eine Steuereinheit (150), wobei die Lichtquelle optisch mit dem Kollimator (90) verbunden ist und konfiguriert ist, einen Strahl (30) zu erzeugen, der sowohl s- als auch p-Komponenten einer polarisierten Welle umfasst, wobei der polarisationsempfindliche optische Sensor ein optisches Prisma (10) umfasst, das eine dielektrische Mehrfachschicht (50) aufweist, die eine dem optischen Prisma (10) benachbarten Seite und eine Sensorseite hat, die angepasst ist, mit einem analysierten Medium (130) in Kontakt zu kommen, das eine Mischung ist, die 0 bis 100 % der Komponente A und 100 bis 0 % der Komponente B umfasst und eine Änderung des Brechungsindex in Abhängigkeit vom Verhältnis der Komponenten A und B zeigt, wobei die Lichtquelle eine quasi-monochromatische Quelle (80) ist, wobei der Kollimator (90) in Bezug auf die dem optischen Prisma (10) benachbarte Seite der dielektrischen Mehrfachschicht (50) derart orientiert ist, dass der Einfallswinkel θ (71) des von der quasi-monochromatischen Quelle (80) beleuchtbaren Strahls kleiner als der kritische Winkel θ_{crit} zur Anregung einer Bloch-Oberflächenwelle ist, um zumindest einen Teil der s- und p-Komponente der polarisierten Welle von der dem optischen Prisma (10) benachbarten Seite der dielektrischen Mehrfachschicht (50) zu reflektieren und die Reflexion in einem Reflexionsverhältnis Rp/Rs für das analysierte Medium (130) mit einem Brechungsindex n₁ zu manifestieren, wobei Rp und Rs Reflexionsgrade für die p- und s-Komponenten der polarisierten Welle sind, wobei die quasi-monochromatische Quelle (80) konfiguriert ist, um den Strahl (30) mit einer Wellenlänge zu erzeugen, die so gewählt ist, dass das Reflexionsverhältnis Rp/Rs bei dieser Wellenlänge stärker im Vergleich zu einer Resonanzwellenlänge zur Anregung der Bloch-Oberflächenwelle verändert wird, wobei der Polarisationsteiler konfiguriert ist, um die s-und p-Komponenten der polarisierten Welle eines reflektierten Strahls (110) in Polarisationskomponenten (121) und (122) zu trennen, wobei der Photodetektor (123, 124) konfiguriert ist, um jede Polarisationskomponente (121, 122) zu detektieren und ein auswertbares Signal entsprechend dem Reflexionsgrad Rp und Rs zu erzeugen, wobei die Steuereinheit (150) konfiguriert ist, um das Signal entsprechend dem Reflexionsgrad Rp und Rs auszuwerten, wobei das Reflexionsverhältnis Rp/Rs eine Funktion des Werts des Brechungsindex n₁ des analysierten Mediums (130) ist, wobei n₁ vom Verhältnis der Komponenten A und B in der Mischung abhängt.

9. Das Sensorsystem nach Anspruch 8, wobei die quasi-monochromatische Quelle (80) eine LED oder eine polychromatische Quelle mit einem schmalbandigen Filter ist.

10. Das Sensorsystem nach einem der Ansprüche 8 bis 9, wobei die Übertragungsrichtung des Polarisators (100) in Bezug auf die Einfallsebene des beleuchtbaren Strahls 45° orientiert ist.

11. Das Sensorsystem nach einem der Ansprüche 8 bis 10, wobei auf der Sensorseite der dielektrischen Mehrfachschicht (50) eine Strömungskammer oder ein offener Raum angeordnet ist.

12. Sensorsystem nach einem der Ansprüche 8 bis 11, wobei die dielektrische Mehrfachschicht (50) mindestens eine TiO₂/SiO₂-Doppelschicht und eine auf der Sensorseite der Mehrfachschicht (50) angeordnete abschliessende TiO₂-Schicht umfasst.

13. Sensorsystem nach einem der Ansprüche 8 bis 12, wobei das optische Prisma (10) aus Glas mit einem Brechungsindex von 1,50 bis 1,71 hergestellt ist.

14. Das Sensorsystem nach Anspruch 13, wobei eine Schicht von Immersionsflüssigkeit mit einem Brechungsindex, der sich vom Brechungsindex des optischen Prismas um höchstens 0,01 unterscheidet, zwischen dem optischen Prisma (10) und der dielektrischen Mehrfachschicht (50) versehen ist.

15. Das Sensorsystem nach einem der Ansprüche 8 bis 14, wobei der Fotodetektor (123, 124) mit einem Verstärker (125, 126) und einem A/D-Wandler (140) verbunden ist, der mit der Steuereinheit (150) verbunden ist.

## Revendications

1. Un procédé d'analyse d'un indice de réfraction d'un milieu analysé (130) à l'aide d'un capteur optique sensible à la polarisation comprenant un prisme optique (10) pourvu d'une multicouche diélectrique (50) ayant un côté adjacent au prisme optique (10) et un côté capteur conçu pour venir en contact avec le milieu analysé (130), où le milieu analysé (130) est un mélange comprenant 0 à 100 % du composant A et 100 à 0 % du composant B, où le mélange présente un changement d'indice de réfraction en fonction du rapport des composants A et B, où le procédé comprend les étapes consistant à :
a. mettre en contact le milieu analysé (130) ayant un indice de réfraction n₁ avec le côté capteur de la multicouche diélectrique (50);
b. éclairer le prisme optique (10) et le côté de la multicouche diélectrique (50) adjacent au prisme optique (10) par un faisceau (30) collimaté et linéairement polarisé comprenant à la fois des composantes *s* et *p* d'une onde polarisée générée par une source quasi-monochromatique (80) de telle sorte que l'angle d'incidence θ (71) est inférieur à l'angle critique θ_{crit} pour l'excitation d'une onde de surface de Bloch, où puis au moins une partie de la composante *s* et *p* de l'onde polarisée est réfléchie par le côté de la multicouche diélectrique (50) adjacent au prisme optique (10), ce qui se manifeste dans un rapport de réflectance Rp/Rs pour le milieu analysé (130) ayant un indice de réfraction n₁, où Rp et Rs sont des réflectances pour les composantes *p* et *s* de l'onde polarisée, où la longueur d'onde de la source quasi-monochromatique (80) est sélectionnée de telle sorte que le rapport de réflectance Rp/Rs à ladite longueur d'onde change dans une plus grande mesure par rapport à une longueur d'onde de résonance pour l'excitation de l'onde de surface de Bloch;
c. séparer les composantes *s* et *p* de l'onde polarisée d'un faisceau réfléchi (110) en composantes de polarisation (121) et (122) au moyen d'un diviseur de polarisation;
d. détecter chaque composante de polarisation (121, 122) par un photodétecteur (123, 124) pour produire un signal analysable correspondant à la réflectance Rp et Rs; et
e. évaluer le signal correspondant à la réflectance Rp et Rs au moyen d'une unité de commande (150), où le rapport de réflectance Rp/Rs est une fonction de la valeur de l'indice de réfraction n₁ du milieu analysé (130), où n₁ dépend du rapport des composants A et B dans le mélange.

2. Le procédé selon la revendication 1, où avant l'étape a., une plage de fonctionnement de longueurs d'onde λ est réglée de telle sorte qu'elle est sélectionnée pour déterminer un changement maximal dans le rapport de réflectance Rp/Rs pour le milieu analysé (130) ayant un indice de réfraction nₘₐₓ et nₘᵢₙ, où la teneur en pourcentage du composant A dans le milieu analysé (130) avec un indice de réfraction nₘₐₓ est supérieure à celle dans le milieu analysé (130) avec un indice de réfraction nₘᵢₙ, où le milieu analysé (130) est un mélange comprenant 0 à 100 % du composant A et 100 à 0 % du composant B, où le mélange présente un changement d'indice de réfraction en fonction du rapport des composants A et B.

3. Le procédé selon la revendication 2, où après le réglage de la plage de fonctionnement de longueurs d'onde λ et avant l'étape a. selon la revendication 1, une calibration est effectuée comprenant les étapes a. à e. selon la revendication 1 pour le milieu analysé (130) ayant un indice de réfraction nₘₐₓ et nₘᵢₙ, où les valeurs nₘₐₓ et nₘᵢₙ déterminent la plage dynamique du procédé d'analyse, et après l'attribution du rapport de réflectance Rp/Rs aux valeurs d'indices de réfraction nₘₐₓ et nₘᵢₙ, une dépendance de calibration du rapport de réflectance Rp/Rs sur l'indice de réfraction du milieu analysé (130) est déterminée, où l'indice de réfraction est une fonction de concentration des composants A et B, où le milieu analysé (130) est un mélange comprenant 0 à 100 % du composant A et 100 à 0 % du composant B, où le mélange présente un changement d'indice de réfraction en fonction du rapport des composants A et B.

4. Le procédé selon l'une quelconque des revendications précédentes, où l'éclairage du prisme optique (10) et le côté de la multicouche diélectrique (50) adjacent au prisme optique (10) par la source quasi-monochromatique (80) sont effectués par une DEL ou par une source polychromatique avec un filtre à bande étroite.

5. Le procédé selon l'une quelconque des revendications précédentes, où le diviseur de polarisation est un prisme de Wollaston (120).

6. Le procédé selon l'une quelconque des revendications précédentes, où le signal analysable correspondant à la réflectance Rp et Rs est amplifié par un amplificateur (125, 126) et converti en un signal numérique par un convertisseur A/C (140).

7. Le procédé selon l'une quelconque des revendications précédentes, où le milieu analysé (130) est mélange quelconque choisi dans le groupe comprenant un mélange d'eau et d'air, un mélange d'éthanol et d'air, un mélange d'éthanol et d'eau, un mélange de glycérine et d'eau, et un mélange de sels inorganiques et/ou organiques dissous et d'eau, en particulier de NaCl et d'eau.

8. Un système de capteur pour mettre en oeuvre le procédé selon l'une quelconque des revendications précédentes, comprenant une source de lumière, un collimateur (90), un polariseur (100), un capteur optique sensible à la polarisation, un diviseur de polarisation et deux photodétecteurs (123, 124), et en outre une unité de commande (150), où la source de lumière est optiquement connectée au collimateur (90) et configurée pour générer un faisceau (30) comprenant à la fois des composantes *s* et *p* d'une onde polarisée, où le capteur optique sensible à la polarisation comprend un prisme optique (10) pourvu d'une multicouche diélectrique (50) avec un côté adjacent au prisme optique (10) et un côté capteur conçu pour venir en contact avec un milieu analysé (130) étant un mélange comprenant 0 à 100 % du composant A et 100 à 0 % du composant B et présentant un changement d'indice de réfraction en fonction du rapport des composants A et B, où la source de lumière est une source quasi-monochromatique (80), où le collimateur (90) est orienté par rapport au côté de la multicouche diélectrique (50) adjacent au prisme optique (10) de telle sorte que l'angle d'incidence θ (71) du faisceau éclairable par la source quasi-monochromatique (80) est inférieur à l'angle critique θ_{crit} pour l'excitation d'une onde de surface de Bloch afin de réfléchir au moins une partie de la composante *s* et *p* de l'onde polarisée depuis le côté de la multicouche diélectrique (50) adjacent au prisme optique (10) et pour manifester la réflexion dans un rapport de réflectance Rp/Rs pour le milieu analysé (130) ayant un indice de réfraction n₁, où Rp et Rs sont des réflectances pour les composantes *p* et *s* de l'onde polarisée, où la source quasi-monochromatique (80) est configurée pour générer le faisceau (30) ayant une longueur d'onde sélectionnée de telle sorte que le rapport de réflectance Rp/Rs à ladite longueur d'onde change dans une plus grande mesure par rapport à une longueur d'onde de résonance pour l'excitation de l'onde de surface de Bloch, où le diviseur de polarisation (123, 124) est configuré pour détecter chaque composant de polarisation (121, 122) et pour produire un signal analysable correspondant à la réflectance Rp et Rs, où l'unité de commande (150) est configurée pour évaluer le signal correspondant à la réflectance Rp et Rs, où le rapport de réflectance Rp/Rs est fonction de la valeur de l'indice de réfraction n₁ du milieu analysé (130), où n₁ dépend du rapport des composants A et B dans le mélange.

9. Le système de capteur selon la revendication 8, où la source quasi-monochromatique (80) est une DEL ou une source polychromatique avec un filtre à bande étroite.

10. Le système de capteur selon l'une quelconque des revendications 8 à 9, où la direction de transmission du polariseur (100) est orientée à 45° par rapport au plan d'incidence du faisceau éclairable.

11. Le système de capteur selon l'une quelconque des revendications 8 à 10, où une chambre d'écoulement ou un espace ouvert est disposé sur le côté capteur de la multicouche diélectrique (50).

12. Le système de capteur selon l'une quelconque des revendications 8 à 11, où la multicouche diélectrique (50) comprend au moins une bicouche TiO₂/SiO₂ et une couche de TiO₂ de terminaison disposée sur le côté capteur de la multicouche (50).

13. Le système de capteur selon l'une quelconque des revendications 8 à 12, où le prisme optique (10) est constitué de verre ayant un indice de réfraction de 1,50 à 1,71.

14. Le système de capteur selon la revendication 13, où une couche de liquide d'immersion ayant un indice de réfraction différent de l'indice de réfraction du prisme optique d'au plus de 0,01 est comprise entre le prisme optique (10) et la multicouche diélectrique (50).

15. Le système de capteur selon l'une quelconque des revendications 8 à 14, où le photodétecteur (123, 124) est relié à un amplificateur (125, 126) et à un convertisseur A/C (140) qui est relié à l'unité de commande (150).
